# EUROPÄISCHE PATENTSCHRIFT

(11) **EP 3 774 542 B1**
(45) Veröffentlichungstag und Bekanntmachung des Hinweises auf die Patenterteilung: **01.02.2023**
(21) Anmeldenummer: 19717795.9
(22) Anmeldetag: 08.04.2019
(51) Int. Cl.: B64D 11/06

(54) **FLUGGASTSITZ MIT EINEM BEWEGBAR GELAGERTEN SITZBODEN**
AIRCRAFT PASSENGER SEAT WITH A MOVABLE SUPPORTED SEAT PAN
SIÈGE DE PASSAGER D'AÉRONEF AVEC UN FOND DE SIÈGE MONTÉ DE MANIÈRE MOBILE

(30) Priorität: 09.04.2018 DE 102018108351
(43) Veröffentlichungstag der Anmeldung: 17.02.2021
(73) Patentinhaber: ZIM Aircraft Seating GmbH, 88090 Immenstaad am Bodensee (DE)
(72) Erfinder: LUECK, Sebastian, 19055 Schwerin (DE); SALZER, Uwe, 88048 Friedrichshafen (DE)
(74) Vertreter: Otten, Roth, Dobler & Partner mbB Patentanwälte
(86) Internationale Anmeldenummer: PCT/EP2019/058792
(87) Internationale Veröffentlichungsnummer: WO 2019/197329

(56) Entgegenhaltungen:
- EP-A2- 1 057 725
- WO-A1-01/12464
- US-A- 3 572 829
- US-A1- 2010 201 172
- US-A1- 2012 038 196
- US-A1- 2017 313 213

## Beschreibung

### Stand der Technik

Zur Ausstattung von Passagierflugzeugen, insbesondere von Langstreckenflugzeugen sind Fluggastsitze mit einem oder mehreren Sitzplätzen in einer Vielzahl von Ausführungen bekannt. Ein Sitzplatz weist einen Sitzboden und zumeist auch eine Rückenlehne auf, wobei an einem Sitzplatz eines Fluggastsitzes nahezu immer verschiedene Sitzpositionen durch Lageänderungen des Sitzbodens, der Rückenlehne und häufig beider Teile einstellbar sind. Dadurch können Passagiere zwischen aktiveren Sitzhaltungen in einer "upright position", z.B. für einen Verzehr von Mahlzeiten, und passiveren Sitzhaltungen in einer "reclined position", z.B. zum Entspannen und Schlafen, nach Belieben wechseln. Insbesondere sind verschiedene Lösungen bekannt, Bewegungen des Sitzbodens und der Rückenlehne mechanisch miteinander zu koppeln. Dadurch lassen sich Sitzeinstellungen vorgeben, die beispielsweise den Bewegungsraum, den sogenannten "living space" benachbarter Fluggäste, insbesondere in einer dahinter angeordneten Sitzreihe, möglichst wenig beeinträchtigen.

Aufgrund der Anforderung im Luftverkehr, Sitzeinrichtungen möglichst leicht auszuführen und den verfügbaren "living space" eines Nutzers bestmöglich auszureizen, stellt die Konstruktion von bequem einstellbaren und zugleich stabilen Fluggastsitzen eine besondere Herausforderung dar.

Dokument US3572829 betrifft einen Passagiersessel für Flugzeuge, aus einem Rahmen an einem Fuß, einem vor- und rückwärtsverschiebbaren Sitz sowie einer gleichzeitig mit der Sitzverschiebung veränderbaren Rückenlehne, wobei der Sitz und die Rückenlehne mittels Achsen verschiebbar in seitlichen Gleitführungen am Rahmen gelagert sind.

### Aufgabe und Vorteile der Erfindung

Aufgabe der vorliegenden Erfindung ist es einen verbesserten einstellbaren Fluggastsitz bereitzustellen, welcher insbesondere eine vergleichsweise besseren, beispielsweise größeren, "living space" bietet und z.B. stabiler und/oder einfacher aufgebaut ist.

Diese Aufgabe wird durch einen Fluggastsitz mit den Merkmalen des Anspruchs 1 gelöst.

Bevorzugte und vorteilhafte Ausführungen der Erfindung sind in den Unteransprüchen aufgeführt.

Die Erfindung geht von einem Fluggastsitz mit einem Gestell aus, wobei das Gestell zur Befestigung an einem Boden an einer Fluggastkabine vorgesehen ist, und mit einem am Gestell bewegbar gelagerten Sitzboden, sowie einer bewegbar gelagerten Rückenlehne.

Im Folgenden genannte Richtungsbezüge sind vorteilhafterweise auf die Sitzrichtung des Flugzeugsitz bezogen.

Das Gestell umfasst eine feste Umhausung der Rückenlehne. Die Umhausung ist als eine Rückenlehnenschale ausgebildet. Durch die Rückenlehnenschale ist beispielsweise eine Ausdehnung des Fluggastsitzes, beispielsweise entgegen einer Sitzrichtung, in einem rückwärtigen Bereich insbesondere unveränderlich festgelegt.

Die Rückenlehne ist insbesondere im Bereich ihrer Oberkante vorteilhafterweise bewegbar am Gestell des Fluggastsitzes, z.B. an der Rückenlehnenschale, gelagert. Vorzugsweise ist die Rückenlehne derart gelagert, dass die Rückenlehne eine Schwenk-Verschiebebewegung ausführen kann, insbesondere zusammen mit dem Sitzboden. Die Rückenlehne ist vorzugsweise bewegbar, z.B. schwenk- oder schwingbeweglich oder z.B. verschieblich an zumindest einer Schiene oder einem Gelenkhebel gelagert.

Der Kern der Erfindung ist darin zu sehen, dass am Gestell wenigstens eine Schiene fixiert ist und dass der Sitzboden über Führungsmittel verschiebbar an der Schiene angeordnet ist. Hierdurch ist eine Verstellung des Flugzeugsitzes, insbesondere des Sitzbodens und/oder der Rückenlehne, bspw. eine zur Verstellung aufzubringende Kraft, für einen Nutzer vergleichsweise erleichtert.

Der Sitzboden ist über die Führungsmittel vorteilhafterweise verschiebbar insbesondere in Sitzrichtung vor und zurück und/oder quer zur Sitzrichtung, z.B. nach unten und oben, angeordnet.

Die Schiene ist vorteilhafterweise als ein insbesondere länglicher Führungskörper ausgebildet. Der Querschnitt der Schiene ist z.B. L-förmig, U-förmig, rund, oval oder rechteckig, z.B. quadratisch vorhanden. Die Schiene ist beispielsweise stabförmig, z.B. als ein Rundrohr oder als ein Vierkantrohr ausgebildet. Z.B. ist die Schiene aus Aluminium hergestellt.

Die Schiene weist im montierten Zustand vorzugsweise einen Querschnitt auf, der in seiner Höhe größer ist, als in seiner Breite.

Zur Gewichtseinsparung weist die Schiene vorteilhafterweise Fensteröffnungen, z.B. in Form von Aussparungen oder Durchgangslöcher, über einen Großteil ihrer Länge auf.

Die Schiene ist beispielsweise zwischen 200mm und 350mm lang. Die Länge der Schiene liegt z.B. in einem Bereich zwischen 200mm und 320mm, z.B. zwischen 220mm und 280mm, z.B. zwischen 230mm und 260mm. Beispielsweise ist die Schiene etwa 250mm, insbesondere etwa 253mm lang. Die Länge der Schiene erstreckt sich vorteilhafterweise quer zum Querschnitt der Schiene.

Im Querschnitt besitzt die Schiene beispielsweise eine Höhe zwischen 12mm und 20mm, insbesondere zwischen 14mm und 18mm. Die Höhe der Schiene ist beispielsweise genau 14mm, 14,5mm, 15mm, 15,5mm, 16mm, 17mm, 17,5mm oder 18mm, insbesondere genau 16,5 mm. Im Querschnitt besitzt die Schiene zum Beispiel eine Breite zwischen 6mm und 12mm, insbesondere zwischen 8mm und 10mm. Die Breite der Schiene ist beispielsweise etwa 8mm, 8,5mm, 9mm, 9,5mm oder etwa 10mm.

Weiter wird vorgeschlagen, dass zwei Schienen vorgesehen sind.

Vorzugsweise sind genau zwei Schienen vorgesehen. Die Schienen sind insbesondere links und rechts, zum Beispiel links und rechts im oder am Randbereich des Sitzbodens, beispielsweise unterhalb des Sitzbodens am Sitzboden montiert.

Außerdem erweist es sich von Vorteil, dass die Schiene eine Führungsbahn für die Führungsmittel aufweist.

Die Führungsmittel sind insbesondere an der Führungsbahn derart verschieblich gelagert, dass der Sitzboden bei einer Bewegung eine Schwenk-Verschiebebewegung auf einer gekrümmten Bahn ausführt. Vorzugsweise ist die Führungsbahn gekrümmt. Vorteilhafterweise ist die Führungsbahn derart ausgebildet, dass die Führungsmittel selbstzentrierend an der Führungsbahn gelagert sind. Beispielsweise ist die Führungsbahn rillenartig ausgebildet, z.B. als eine Führungsrille.

Der Sitzboden und die Rückenlehne sind gelenkig miteinander verbunden.

Vorteilhafterweise ist der Sitzboden mit der Rückenlehne über eine Schwenkachse im hinteren Bereich des Sitzbodens beziehungsweise im unteren Bereich der Rückenlehne gekoppelt. Damit führt beispielswiese bei einer Schwenk-Verschiebebewegung des Sitzbodens die Rückenlehne ebenfalls eine Schwenk-Verschiebebewegung durch. Denkbar ist aber auch, dass der Fluggastsitz derart ausgebildet ist, dass eine Bewegung des Sitzbodens von einer Bewegung der Rückenlehne entkoppelt ist.

In einer vorteilhaften Variante des Fluggastsitz ist die wenigstens eine Schiene unterhalb des Sitzbodens angeordnet. Beispielsweise sind zwei oder mehr Schienen, insbesondere genau zwei Schienen unterhalb des Sitzbodens angeordnet. Die Schienen verlaufen vorzugsweise parallel und sind z.B. identisch ausgebildet, insbesondere spiegelsymmetrisch identisch ausgebildet. Bevorzugterweise sind die Schienen spiegelsymmetrisch am Gestell angeordnet.

Überdies ist es von Vorteil, dass die Führungsmittel einen Rollenwagen umfassen. Insbesondere umfassen die Führungsmittel zwei Rollenwagen für zwei Schienen, zum Beispiel ein Rollenwagen für jede Schiene.

Auch ist es von Vorteil, dass am Rollenwagen mehrere Rollen angeordnet sind. Auf diese Weise ist der Sitzboden kippstabil an der Führung aus Schiene und Führungsmittel sowie Rollenwagen beweglich montiert.

Beispielsweise umfasst der Rollenwagen mindestens zwei, drei, vier oder fünf Rollen. Mit zunehmender Anzahl der Rollen kann eine stabile Führung an der wenigstens eine Schiene verbessert werden.

Eine Rolle besitzt vorteilhafterweise eine kreisförmige Kontur. Die Rolle ist beispielsweise in Form eines Rads vorhanden. Denkbar ist auch, dass die Rolle zylinderförmig oder kugelförmig ausgebildet ist. Die Rollen sind vorteilhafterweise drehbar am Rollenwagen gelagert. Bevorzugterweise ist eine Rolle umfänglich konkav oder konvex ausgebildet. Beispielsweise ist eine Rollfläche der Rolle, mit welcher die Rolle an der Führungsbahn der Schiene gelagert ist, in Richtung einer Rotationsachse der Rolle gesehen gebogen oder gekrümmt vorhanden, z.B. konkav und/oder konvex. Vorteilhafterweise ist ein umfängliche Oberfläche auf eine Kontur der Führungsbahn der Schiene abgestimmt.

Auch wird vorgeschlagen, dass die wenigstens eine Schiene gegenüberliegende Führungsbahnen aufweist. Die Führungsbahnen sind insbesondere so ausgestaltet, dass darauf Rollen der Führungsmittel abrollen können.

An gegenüberliegenden Führungsbahnen sind insbesondere vorgespannt gegenüberliegende Rollen der Führungsmittel vorgesehen, die auf den Führungsbahnen abrollen. Durch vorgespannte Rollen lässt sich eine straffe und stabile Führung eines Rollenwagens an der Schiene, und damit des Sitzbodens realisieren. Vorteilhafterweise sind mindestens jeweils zwei sich gegenüberliegende Rollen vorgesehen.

Der Rollenwagen hat eine Länge von 30mm bis 40mm, 40mm bis 50mm, 50mm bis 60mm, 70mm bis 80mm, 80mm bis 90mm oder 100mm bis 110mm. Insbesondere liegt die Länge L des Rollenwagens in einem Bereich von 30mm bis 120mm, z.B. in einem Bereich von 60mm bis 120mm. Die Höhe H des Führungswagens liegt vorzugsweise in einem Bereich von 30mm bis 70mm, z.B. in einem Bereich von 50mm bis 70mm, insbesondere bei ca. 60mm. Der Rollenwagen ist vorzugsweise ca. 100mm, insbesondere ca. 97mm lang. Der Rollenwagen erstreckt sich entlang seiner Länge beispielsweise in einer Ausdehnung zwischen einer Rollfläche einer ersten Rolle zu einer Rollfläche einer weiteren Rolle des Rollenwagens. Der Rollenwagen erstreckt sich beispielsweise in einer Breite B in einem Bereich zwischen 16mm und 25mm, zum Beispiel zwischen 20mm und 24mm. Die Breite des Rollenwagens ist beispielsweise etwa 20mm, 20,5mm, 21mm, 21,5mm, 22mm, 23mm, 23,5mm oder 24mm, insbesondere 22,5 mm.

Die Rollen des Rollenwagens sind vorteilhafterweise an einer Platte des Rollenwagens einseitig gelagert, insbesondere über Kugellager und/oder Wälzlager. Vorteilhafterweise umgreift der Rollenwagen die Führungsschiene vollständig. Beispielsweise umschließt der Rollenwagen die Führungsschiene in einer Richtung quer zu einer Längserstreckung der Führungsschiene insbesondere vollständig. Bevorzugt ist der an den Schienen innen liegende Abschnitt einer Umgreifung in seiner Länge entlang der Schiene, z.B. in Längserstreckung der Schiene gesehen, nur über maximal die Hälfte des kompletten Rollenwagens ausgedehnt. Insbesondere ist der an den Schienen innen liegende Abschnitt der Umgreifung U-förmig ausgebildet, insbesondere U-förmig gebogen. Die Umgreifung erstreckt sich vorteilhafterweise von der Platte des Rollenwagens, welche vorteilhaft auf einem außen liegenden Abschnitt der Schiene vorhanden ist, insbesondere entlang des Querschnitts der Schiene um die Schiene herum.

Damit besteht die Möglichkeit, dass ein Rollenwagen sich über die komplette Länge einer Schiene bewegen kann, und dennoch an zum Beispiel einer Seite der Schiene, gegebenenfalls die Innenseite der Schiene, eine Montagemöglichkeit für die Schiene am verbleibenden Sitzgestell ermöglicht ist, ohne eine Störung der Bewegung des Rollenwagens über die komplette Länge oder nahezu komplette Länge der Schiene zu verursachen.

Eine Montage der Schiene am Gestell erfolgt vorzugsweise im jeweiligen Endbereich der Schiene.

Außerdem wird vorgeschlagen, dass zumindest eine Führungsbahn an der Schiene konkav ist. Eine konkave Führungsbahn erlaubt eine sichere Führung einer darin abrollenden Rolle, die vorzugsweise eine dazu passende ausgebauchte Rollfläche besitzt. Vorstellbar ist auch, dass eine Führungsbahn konvex ausgebildet ist und vorteilhafterweise eine dazu passende Rolle mit z.B. einer eingedellten Rollfläche vorgesehen ist.

Bei zwei gegenüberliegenden konkaven oder bei zwei gegenüberliegenden konvexen Führungsbahnen kann auf diese Weise auch erreicht werden, dass ein Rollenwagen, der entlang der Führungsschienen auf die Führungsbahnen aufgeschoben wird, im aufgeschobenen Zustand, bei insbesondere gegenüberliegend vorgespannten Rollen gegen eine Seitenbewegung an der Führungsschiene stabilisiert ist, insbesondere sich seitlich nicht von der Führungsschiene abziehen lässt. Vorzugsweise ist lediglich ein Ausfahren bzw. Einfahren entlang der Führungsschienen, insbesondere in Richtung einer Längserstreckung der Schiene, aus den Führungsbahnen möglich.

In einer vorteilhaften Modifikation des Fluggastsitz sind Rollen eines Rollenwagens, der verschiebbar zusammen mit dem Sitzboden an der wenigstens einen Schiene angeordnet ist, an der Schiene vorgespannt. Hierdurch ist der Rollenwagen flexibel an der Schiene gehalten. Vorteilhafterweise sind hierdurch auch Fertigungstoleranzen insbesondere bei einer Bewegung des Rollenwagens entlang der Schiene ausgeglichen.

Ebenfalls erweist es sich von Vorteil, dass Rollen eines Rollenwagens, der verschiebbar zusammen mit dem Sitzboden an der wenigstens einen Schiene angeordnet ist, kugelgelagert und/oder wälzgelagert sind. Durch Kugellager und/oder Wälzlager lässt sich der Verschiebeaufwand durch einen Benutzer bei der Bewegung des Sitzbodens vergleichsweise klein halten. Vorzugsweise sind alle Rollen kugelgelagert und/oder wälzgelagert.

Von Vorteil erweist sich auch, dass die wenigstens eine Schiene eine derart gekrümmte Führungsbahn aufweist, dass der Sitzboden nach vorne und oben bewegbar ist. Die Bewegung nach vorne oben ist insbesondere bezogen auf die Sitzrichtung zu sehen. Beispielsweise ist die Schiene derart gekrümmt vorhanden und der Sitzboden derart mittels des Rollenwagens an der Schiene angebunden, dass der Sitzboden ausgehend von einer ersten Position des Sitzbodens mit einem vorderen Sitzrand eine Schwenkbewegung nach vorne oben ausführt. Beispielsweise ist die Schiene derart gekrümmt vorhanden und der Sitzboden derart mittels des Rollenwagens an der Schiene angebunden, dass der Sitzboden mit einem hinteren Sitzrand ausgehend von der ersten Position des Sitzbodens, eine Schwenkbewegung nach vorne unten ausführt. Der hintere Sitzrand ist vorteilhafterweise gegenüberliegend zum vorderen Sitzrand ausgebildet.

Beispielsweise ist die Schiene im angeordneten Zustand am Gestell mit zumindest einem Ende nach oben verlaufend vorhanden. Bevorzugterweise ist die Schiene im angeordneten Zustand am Gestell mit einem Ende, insbesondere mit beiden Enden in Richtung Sitzboden verlaufend ausgebildet.

Auch ist es von Vorteil, dass die wenigstens eine Schiene an zwei beabstandeten Tragrohren des Gestells montiert ist.

Halterungen der Schiene zur Montage an den Tragrohren sind insbesondere so an einer Längsseite einer Schiene angebracht, dass an der gegenüberliegenden Längsseite Führungsmittel sich von Halterungen ungestört bewegen können. Die Halterungen sind insbesondere derart auf, auf der gleichen Seite sich befindenden, Materialabschnitte der Führungsmittel abgestimmt, das Rollen, die auf der gegenüberliegenden Seite mit Montagemitteln verbunden sind, den ganzen, oder nahezu den ganzen Längsbereich der Schiene bei einer Abrollbewegung nutzen können. Gegebenenfalls sind an den Enden der Schienen Stoppelemente vorgesehen, dass die Führungsmittel sich nicht über die Schiene hinausbewegen können. Ansonsten steht praktisch vollständig die Länge der Schiene für eine Bewegung der Führungsmittel zur Verfügung. Gegebenenfalls ist eine Verschiebebewegung in einem Bereich von 95%, 90%, 85%, 80% der Länge der Schiene möglich.

In einer Ausgestaltung des Fluggastsitz der Erfindung, umfasst der Fluggastsitz an der Rückenlehne ein Verstellmechanismus, wobei der Verstellmechanismus zwischen Rückenlehne und der Umhausung der Rückenlehne ausgebildet ist, sodass die Rückenlehne und der an die Rückenlehne gekoppelten Sitzboden mittels des Verstellmechanismus bewegbar ist.

Beispielsweise ist die Rückenlehne mittels des Gelenkhebels bewegliche mit der Umhausung verbunden. Vorteilhafterweise umfasst der Fluggastsitz zwei Gelenkhebel. Beispielsweise ist jeweils ein Gelenkhebel rechts und links von der Rückenlehne ausgebildet. Der Gelenkhebel ist vorteilhafterweise an einer ersten Lagerstelle an der Rückenlehne schwenkbeweglich, insbesondere drehbeweglich gelagert und an einer zweiten Lagerstelle an der Umhausung schwenkbeweglich, insbesondere drehbeweglich gelagert. Die Lagerstellen sind beispielsweise ortsfest an der Rückenlehne und/oder ortsfest an der Umhausung vorhanden. Hierdurch ist eine Bewegung der Rückenlehne relativ zur Umhausung begrenzt. Der Gelenkhebel ist beispielweise an einem Seitenbereich der Rückenlehne mit der Rückenlehne verbunden.

Der Verstellmechanismus umfasst beispielsweise ein Dämpfungselement, z.B. einen Hydraulikdämpfer oder einen pneumatischen Dämpfer. Der Verstellmechanimus umfasst beispielsweise einen Hydraulikzylinder oder einen Pneumatikzylinder. Beispielsweise umfasst der Verstellmechanismus ein Antriebselement, z.B. einen mechanischen Aktor, z.B. eine Feder und/oder einen Elektromotor.

Vorteilhafterweise ist der Verstellmechanismus insbesondere mit einem ersten Ende im Bereich der Oberkante der Rückenlehne mit der Rückenlehne gekoppelt, insbesondere verbunden. Beispielsweise ist der Verstellmechanismus mit einem zweiten Ende in einem mittleren Bereich der Umhausung der Rückenlehne mit der Umhausung gekoppelt. Beispielsweise ist der Verstellmechanismus schwenkbeweglich an der Umhausung festgelegt.

Bevorzugterweise ist der Verstellmechanismus derart vorhanden, dass eine Bewegung der Rückenlehne und beispielsweise des Sitzbodens aus einer "upright position" in eine "reclined position" des Fluggastsitz durch den Verstellmechanismus gedämpft ist und/oder eine insbesondere entgegengesetzte Bewegung der Rückenlehne und beispielsweise des Sitzbodens aus einer "reclined position" in eine "upright position" durch den Verstellmechanismus angetrieben ist.

Der Verstellmechanismus umfasst vorteilhafterweise ein Sicherungsorgan mittels welchem eine Stellung des Dämpfungselements und/oder des Antriebselements festlegbar, insbesondere fixierbar ist. Hierdurch ist der Fluggastsitz, insbesondere die Rückenlehen und z.B. der Sitzboden in einer Position festlegbar, insbesondere fixierbar, beispielsweise in der "upright position". Das Sicherungsorgan ist beispielsweise als ein Verriegelungselement ausgebildet.

In der "upright position" befindet sich ein auf dem Fluggastsitz sitzender Fluggast vorteilhafterweise in einer aufrechten Position. In der aufrechten Position hat der Fluggast sich beispielsweise bei einem Start oder einer Landung eines Flugzeugs, in welchem der Fluggastsitz angeordnet ist, zu befinden. In der "reclined position" befindet sich ein auf dem Fluggastsitz sitzender Fluggast vorteilhafterweise in einer eher liegenden Position, welche der Fluggast beispielsweise während der Flugreise zwischen Start und Landung einnehmen kann.

### Beschreibung eines Ausführungsbeispiels

Nachfolgend wird ein Ausführungsbeispiel der Erfindung anhand von schematischen Zeichnungen näher erläutert und weitere Vorteile genannt.

Es zeigen:
- Figur 1: in einer seitlichen Ansicht einen erfindungsgemäßen Fluggastsitz in einer ersten Position,
- Figur 2: in einer seitlichen Ansicht den Fluggastsitz nach Figur 1, wobei Teile der Rückenlehne transparent dargestellt sind,
- Figur 3: in einer seitlichen Ansicht den Fluggastsitz nach Figur 1 in einer weiteren Position,
- Figur 4: in einer seitlichen Ansicht den Fluggastsitz nach Figur 1 in der Position nach Figur 3, wobei Teile der Rückenlehne transparent dargestellt sind,
- Figur 5: einen Ausschnitt des Fluggastsitz gemäß Figur 1 in einer perspektivischen Ansicht von schräg seitlich oben vorne,
- Figuren 6: bis 9 eine Schiene mit einem Rollenwagen des Fluggastsitz gemäß Figur 1 in verschiedenen Ansichten und
- Figur 10: eine Draufsicht von oben auf den Fluggastsitz gemäß Figur 1.

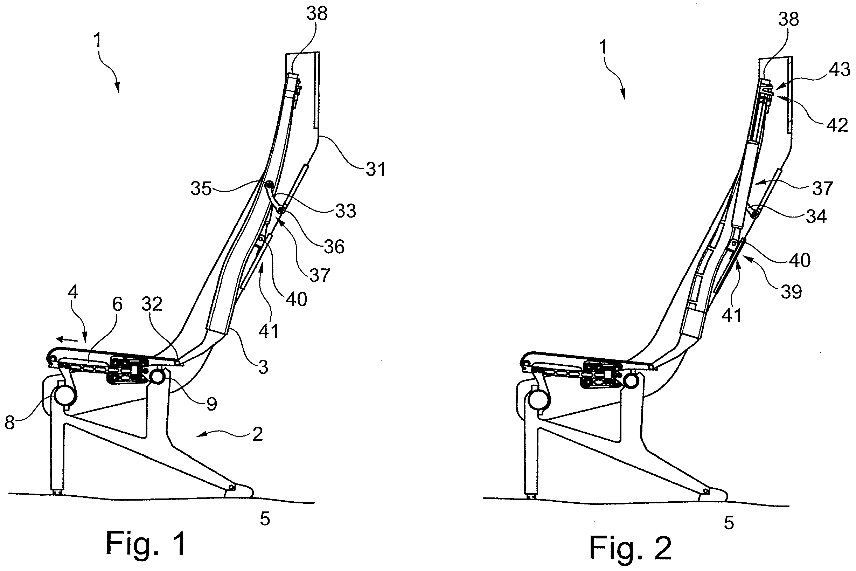

Figur 1 zeigt einen erfindungsgemäßen Fluggastsitz 1 mit einem Gestell 2, einer Rückenlehne 3 und einem Sitzboden 4. Im montierten Zustand in einem Flugzeug ist der Fluggastsitz 1 vorteilhafterweise über das Gestell 2 an einem Kabinenboden 5 einer Flugzeugkabine befestigt.

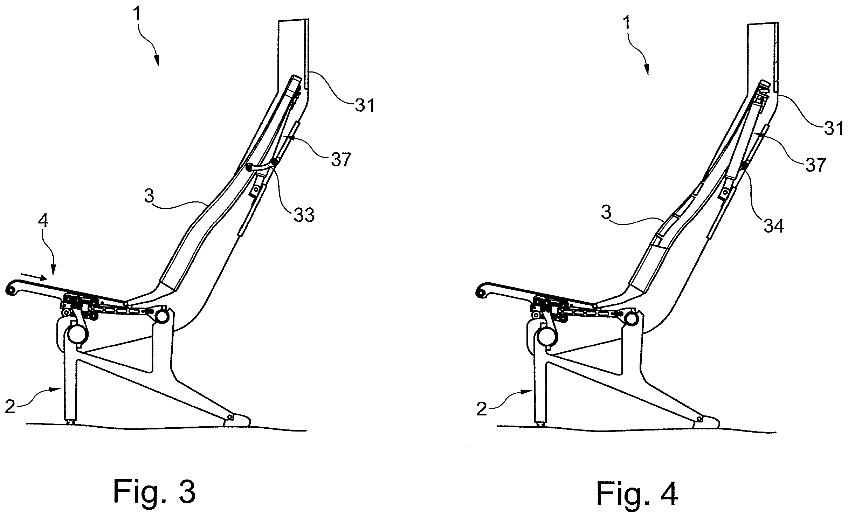

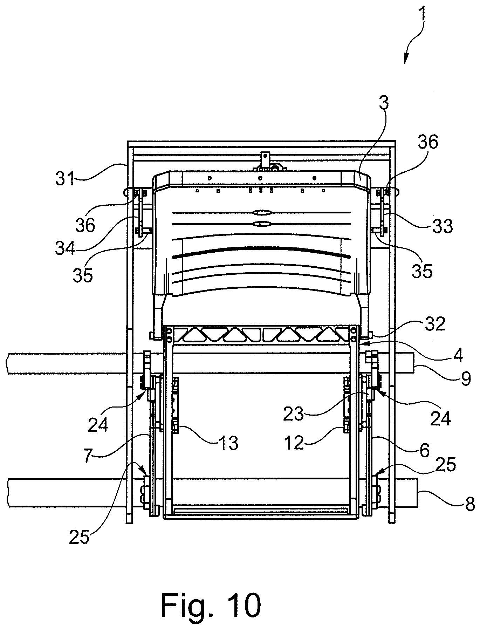

In den Figuren 1, 2 und 10 ist der Fluggastsitz 1 in einer "upright position" gezeigt und in den Figuren 3 und 4 in einer "reclined position".

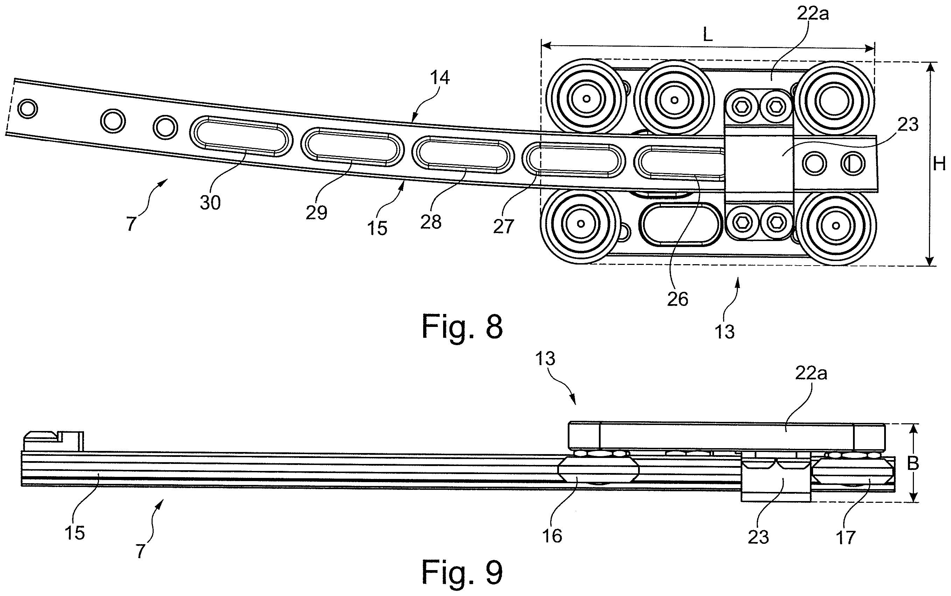

Am Gestell 2 sind Schienen 6, 7 ausgebildet, mittels welchen der Sitzboden 4 beweglich am Gestell 2 angeordnet ist (Figuren 1 bis 5, 10). Die Schienen 6, 7 umfassen insbesondere zur Gewichtsreduktion vorteilhafterweise Fensteröffnungen 26 bis 30 (Figur 8). Die Schienen 6, 7 sind an Tragrohren 8, 9 am Gestell 2 befestigt. Die Tragrohre 8, 9 sind vorzugsweise zu einer Sitzrichtung des Fluggastsitz 1 quer verlaufend am Gestell 2 vorhanden. Beispielsweise verbindend die Tragrohre 8, 9 zwei oder mehr Fluggastsitze 1. Die Fluggastsitze 1 sind durch die Tragrohre 8, 9 beispielsweise zu einer Fluggastsitzreihe gekoppelt. Beispielsweise sind die Schienen 6, 7 jeweils mit einem ersten Ende 10 mit einem ersten Tragrohr 8 und mit einem zweiten Ende 11 mit dem zweiten Tragrohr 9 verbunden. Zum Beispiel verläuft die Schiene 6, 7 im angeordneten Zustand am Gestell 2 überhalb der Tragrohre 8, 9. Vorteilhafterweise sind die Schienen 6, 7 derart am Gestell 2 montiert, dass ein Sitzgestell 21 des Sitzbodens 4 in eine Längserstreckung der Tragrohre 8, 9 gesehen zwischen den Schienen 6, 7 vorhanden ist. Hierdurch ist der Sitzboden 4 vergleichsweise flach aufbauend am Gestell 2 angeordnet.

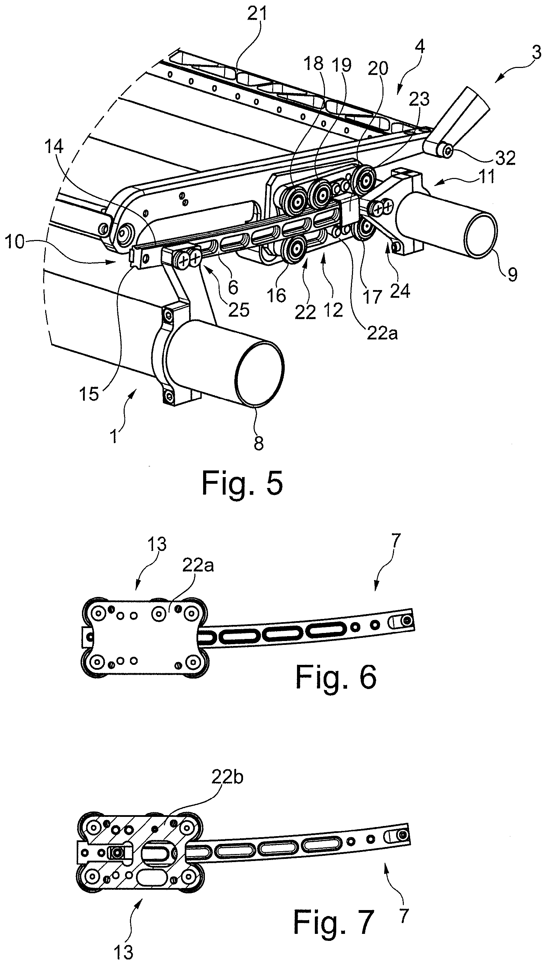

Am Sitzboden 4 sind Führungsmittel in Form eines Rollenwagens 12, 13 angeordnet, mit welchen der Sitzboden 4 entlang von Führungsbahnen 14, 15 der Schienen 6, 7 beweglich geführt ist. Ein Rollenwagen 12, 13 umfasst vorteilhafterweise mehrere Rollen, insbesondere genau fünf Rollen 16 bis 20. Ein Rollenwagen 12, 13 umfasst vorteilhafterweise eine Platte 22 an welcher die Rollen 16 bis 20 drehbar gelagert sind. In den Figuren 6 und 7 sind zwei verschiedene Plattenvarianten 22a, 22b der Platte 22 abgebildet.

Der Rollenwagen 12, 13 umfasst des Weiteren bevorzugterweise eine Umgreifung 23, welche an der Platte 22 fixiert ist, sodass im angeordneten Zustand des Rollenwagens 12, 13 an der Schiene 6, 7 der Rollenwagen 12, 13 die Schiene 6, 7 zumindest entlang eines Querschnitts der Schiene 6, 7 umgreift. Die Umgreifung 23 des Rollenwagens 12, 13 erstreckt sich in Längserstreckung der Schienen 6, 7 beispielsweise über ein kleinere Strecke, als eine Gesamtlänge des Rollenwagens 12, 13. Hierdurch kann der Rollenwagen 12, 13 vorzugsweise über etwa die gesamte Länge der Führungsbahnen 14, 15 der Schienen 6, 7 abrollen. Weiter bildet die Umgreifung 23 hierdurch vorteilhafterweise ein Anschlagselement, welches an Stoppelementen 24, 25 an den Endbereichen 10, 11 der Schienen 6, 7 ansteht, sodass der Rollenwagen 12, 13 an der Schiene 6, 7 gehalten ist. Zum Beispiel bilden Anbindungselemente die Stoppelemente 24, 25, wobei die Anbindungselemente die Schiene 6, 7 mit den Tragrohren 8, 9 verbinden.

Der Rollenwagen 12, 13 erstreckt sich vorteilhafterweise in einer Länge L, einer Höhe H und einer Breite B (siehe Figuren 8, 9).

Die Führungsbahnen 14, 15 sind beispielsweise quer zu einer Längserstreckung der Schienen 6, 7 konkav ausgebildet. Die Führungsbahn 14, 15 ist beispielsweise rillenartig vorhanden. Hierdurch ist der Rollenwagen 12, 13, insbesondere sind die Rollen 16 bis 20 des Rollenwagens 12, 13, gegenüber Querkräften auf der Führungsbahn 14, 15 gehalten bzw. stabilisiert. In Längserstreckung der Schienen 6, 7 gesehen ist z.B. die obere Führungsbahn 14 konkav nach oben gekrümmt vorhanden und die untere Führungsbahn 15 ist z.B. ebenfalls nach oben gekrümmt aber nach außen konvex ausgebildet.

Der Sitzboden 4 ist relativ zum Rollenwagen 12, 13 insbesondere zur Platte 22 des Rollenwagens 12, 13 positionsfest, insbesondere starr vorhanden. Denkbar ist auch, dass der Sitzboden 4 relativ zum Rollenwagen 12, 13 beweglich, z.B. drehbeweglich am Rollenwagen 12, 13 angebunden ist.

Das Sitzgestell 2 umfasst weiterhin eine Umhausung 31. Die Umhausung 31 bildet beispielsweise eine Rückenlehnenschale oder eine Gesamtumhausung des Fluggastsitz. Die Gesamtumhausung umschließt den Fluggastsitz beispielsweise zumindest seitlich und hinten.

Die Rückenlehne 3 ist vorteilhafterweise über eine Schwenkachse 32 mit dem Sitzboden 4 schwenkbar verbunden. Weiter ist die Rückenlehne 3 beispielsweise mittels Gelenkhebel 33, 34 beweglich mit der Umhausung 31 verbunden. Die Gelenkhebel 33, 34 sind beispielsweise an einer ersten Lagerstelle 35 mit der Rückenlehne 3 gekoppelt und an einer zweiten Lagerstelle 36 mit der Umhausung 31. Außerdem ist zwischen der Rückenlehne 3 und der Umhausung 31 ein Verstellmechanismus 37 vorhanden Der Verstellmechanismus 37 ist beispielsweise in Form eines hydraulischen Zylinders ausgebildet, welcher vorteilhafterweise sowohl eine dämpfende, als auch eine antreibende Funktion aufweist. Der Verstellmechanismus 37 ist beispielsweise mit einem ersten Ende 41 in einem mittleren Bereich 39 zwischen einem Sitzboden 4 und einer Oberkante 38 der Rückenlehne 3 an der Umhausung 31 angeordnet. Der Verstellmechanismus 37 ist beispielweise schwenkbar an einem Lager 40 an der Umhausung 31 befestigt. An einem zweiten Ende 42 des Verstellmechanismus 37 ist der Verstellmechanismus 37 vorteilhafterweise insbesondere beweglich im Bereich der Oberkante 38 an der Rückenlehne 3 angeordnet. Das erste und das zweite Ende 41, 42 des Verstellmechanismus 37 sind vorteilhafterweise gegenüberliegend und beabstandet am Verstellmechanismus 37 vorhanden. Weiterhin umfasst der Verstellmechanismus 37 bevorzugterweise ein Verriegelungselement 43 mittels welchem z.B. eine Position des Verstellmechanismus 37 verriegelbar ist. Hierdurch ist der Fluggastsitz 1 beispielsweise in der "upright position" (siehe Figuren 1, 2) gehalten. Betätigt ein Nutzer des Fluggastsitz 1 den Fluggastsitz 1, z.B. entriegelt der Nutzer die Position des Verstellmechanismus 37, dann kann der Sitzboden 4 insbesondere durch den Nutzer entlang der Führungsbahnen 14, 15 der Schienen 6, 7 nach vorne oben bewegt werden, sodass der Fluggastsitz 1 sind am Ende der Bewegung des Sitzbodens 4 in einer "reclined position" entsprechend der Figuren 3 und 4 befindet.

**Bezugszeichenliste**

| | | | |
|---|---|---|---|
| 1 | Fluggastsitz | 23 | Umgreifung |
| 2 | Gestell | 24, 25 | Stoppelement |
| 3 | Rückenlehne | 26 - 30 | Fensteröffnung |
| 4 | Sitzboden | 31 | Umhausung |
| 5 | Kabinenboden | 32 | Schwenkachse |
| 6, 7 | Schiene | 33, 34 | Gelenkhebel |
| 8, 9 | Tragrohr | 35, 36 | Lagerstelle |
| 10, 11 | Ende | 37 | Verstellmechanismus |
| 12, 13 | Rollenwagen | 38 | Oberkante |
| 14, 15 | Führungsbahn | 39 | Bereich |
| 16 - 20 | Rolle | 40 | Lager |
| 21 | Sitzgestell | 41, 42 | Ende |
| 22 | Platte | 43 | Verriegelungselement |
| 22a, 22b | Platte | | |

## Patentansprüche

1. Fluggastsitz (1) mit einem Gestell (2), dass zur Befestigung an einem Boden (5) an einer Fluggastkabine vorgesehen ist, mit einem am Gestell (2) bewegbar gelagerten Sitzboden (4) sowie einer bewegbar gelagerten Rückenlehne (3), wobei am Gestell (2) wenigstens eine Schiene (6, 7) fixiert ist und der Sitzboden (4) über Führungsmittel verschiebbar an der Schiene (6, 7) angeordnet ist, wobei der Sitzboden (4) und die Rückenlehne (3) gelenkig miteinander verbunden sind, **dadurch gekennzeichnet, dass** das Gestell (2) eine Umhausung (31) der Rückenlehne (3) aufweist, wobei die Umhausung (31) als eine Rückenlehnenschale ausgebildet ist, wobei an der Rückenlehne (3) ein Verstellmechanismus (37) zwischen Rückenlehne (3) und der Rückenlehnenschale ausgebildet ist, sodass die Rückenlehne (3) und der an die Rückenlehne (3) gekoppelten Sitzboden (4) mittels des Verstellmechanismus (37) bewegbar ist.

2. Fluggastsitz (1) nach Anspruch 1, **dadurch gekennzeichnet, dass** zwei Schienen (6, 7) vorgesehen sind.

3. Fluggastsitz (1) nach einem der vorhergehenden Ansprüche, **dadurch gekennzeichnet, dass** die Schiene (6, 7) eine Führungsbahn (14, 15) für die Führungsmittel aufweist.

4. Fluggastsitz (1) nach einem der vorhergehenden Ansprüche, **dadurch gekennzeichnet, dass** die wenigstens eine Schiene (6, 7) unterhalb des Sitzbodens (4) angeordnet ist.

5. Fluggastsitz (1) nach einem der vorhergehenden Ansprüche, **dadurch gekennzeichnet, dass** die Führungsmittel einen Rollenwagen (12, 13) umfassen.

6. Fluggastsitz (1) nach Anspruch 5, **dadurch gekennzeichnet, dass** am Rollenwagen (12, 13) mehrere Rollen (16 - 20) angeordnet sind.

7. Fluggastsitz (1) nach einem der vorhergehenden Ansprüche,
**dadurch gekennzeichnet, dass** die wenigstens eine Schiene (6, 7) gegenüberliegende Führungsbahnen (14, 15) aufweist.

8. Fluggastsitz (1) nach einem der vorhergehenden Ansprüche,
**dadurch gekennzeichnet, dass** zumindest eine Führungsbahn (14) an der Schiene (6, 7) konkav ist.

9. Fluggastsitz (1) nach einem der vorhergehenden Ansprüche,
**dadurch gekennzeichnet, dass** Rollen (16 - 20) eines Rollenwagens (12, 13), der verschiebbar zusammen mit dem Sitzboden (4) an der wenigstens einen Schiene (6, 7) angeordnet ist, an der Schiene (6, 7) vorgespannt sind.

10. Fluggastsitz (1) nach einem der vorhergehenden Ansprüche, **dadurch gekennzeichnet, dass** Rollen (16 - 20) eines Rollenwagens (12, 13), der verschiebbar zusammen mit dem Sitzboden (4) an der wenigstens einen Schiene (6, 7) angeordnet ist, kugelgelagert und/oder wälzgelagert sind.

11. Fluggastsitz (1) nach einem der vorhergehenden Ansprüche, **dadurch gekennzeichnet, dass** die wenigstens eine Schiene (6, 7) eine derart gekrümmte Führungsbahn (14, 15) aufweist, dass der Sitzboden (4) nach vorne und oben bewegbar ist.

12. Fluggastsitz(1) nach einem der vorhergehenden Ansprüche, **dadurch gekennzeichnet, dass** die wenigstens eine Schiene (6, 7) an zwei beabstandeten Tragrohren (8, 9) des Gestells (2) montiert ist.

## Claims

1. Air passenger seat (1) with a frame (2) which is provided for fastening to a floor (5) of an aircraft passenger cabin, with a seat base (4) which is mounted movably on the frame (2), and a movably mounted backrest (3), wherein at least one rail (6, 7) is fixed on the frame (2), and the seat base (4) is arranged on the rail (6, 7) such that it can be displaced via guide means; wherein the seat base (4) and the backrest (3) are connected to one another in an articulated manner,
**characterized in that** the frame (2) has an enclosure (31) of the backrest (3), wherein the enclosure (31) is configured as a backrest shell; wherein an adjustment mechanism (37) is configured on the backrest (3), between the backrest (3) and the backrest shell, such that the backrest (3) and the seat base (4) coupled to the backrest (3) are movable by means of the adjustment mechanism (37).

2. Air passenger seat (1) according to Claim 1, **characterized in that** two rails (6, 7) are provided.

3. Air passenger seat (1) according to one of the preceding claims, **characterized in that** the rail (6, 7) has a guide track (14, 15) for the guide means.

4. Air passenger seat (1) according to one of the preceding claims, **characterized in that** the at least one rail (6, 7) is arranged below the seat base (4).

5. Air passenger seat (1) according to one of the preceding claims, **characterized in that** the guide means comprises a roller carriage (12, 13).

6. Air passenger seat (1) according to Claim 5, **characterized in that** a plurality of rollers (16 - 20) are arranged on the roller carriage (12, 13).

7. Air passenger seat (1) according to one of the preceding claims, **characterized in that** the at least one rail (6, 7) has guide tracks (14, 15) which lie opposite one another.

8. Air passenger seat (1) according to one of the preceding claims, **characterized in that** at least one guide track (14) on the rail (6, 7) is concave.

9. Air passenger seat (1) according to one of the preceding claims, **characterized in that** rollers (16 - 20) of a roller carriage (12, 13) which is arranged displaceably together with the seat base (4) on the at least one rail (6, 7) are prestressed on the rail (6, 7).

10. Air passenger seat (1) according to one of the preceding claims, **characterized in that** rollers (16 - 20) of a roller carriage (12, 13) which is arranged displaceably together with the seat base (4) on the at least one rail (6, 7) are mounted by way of ball bearings and/or roller bearings.

11. Air passenger seat (1) according to one of the preceding claims, **characterized in that** the at least one rail (6, 7) has a guide track (14, 15) which is curved in such a manner that the seat base (4) can be moved forwards and upwards.

12. Air passenger seat (1) according to one of the preceding claims, **characterized in that** the at least one rail (6, 7) is mounted on two support tubes (8, 9) of the frame (2) which are spaced apart.

## Revendications

1. Siège pour passager d'avion (1) avec un cadre (2) qui est prévu pour être fixé à un plancher (5) d'une cabine de passager d'avion, avec un fond de siège (4) monté de manière mobile sur le cadre (2) ainsi qu'un dossier (3) monté de manière mobile, au moins un rail (6, 7) étant fixé sur le cadre (2) et le fond de siège (4) étant agencé de manière à pouvoir être coulissé sur le rail (6, 7) par l'intermédiaire de moyens de guidage, le fond de siège (4) et le dossier (3) étant reliés entre eux de manière articulée, **caractérisé en ce que** le cadre (2) présente un logement (31) du dossier (3), le logement (31) étant réalisé sous la forme d'une coque de dossier, un mécanisme de réglage (37) étant réalisé sur le dossier (3) entre le dossier (3) et la coque de dossier, de telle sorte que le dossier (3) et le fond de siège (4) couplé au dossier (3) sont mobiles au moyen du mécanisme de réglage (37).

2. Siège pour passager d'avion (1) selon la revendication 1, **caractérisé en ce que** deux rails (6, 7) sont prévus.

3. Siège pour passager d'avion (1) selon l'une quelconque des revendications précédentes, **caractérisé en ce que** le rail (6, 7) présente une piste de guidage (14, 15) pour les moyens de guidage.

4. Siège pour passager d'avion (1) selon l'une quelconque des revendications précédentes, **caractérisé en ce que** l'au moins un rail (6,7) est agencé en dessous du fond de siège (4).

5. Siège pour passager d'avion (1) selon l'une quelconque des revendications précédentes, **caractérisé en ce que** les moyens de guidage comprennent un chariot à roulettes (12, 13).

6. Siège pour passager d'avion (1) selon la revendication 5, **caractérisé en ce que** plusieurs roulettes (16 - 20) sont agencées sur le chariot à roulettes (12, 13).

7. Siège pour passager d'avion (1) selon l'une quelconque des revendications précédentes, **caractérisé en ce que** l'au moins un rail (6, 7) présente des pistes de guidage opposées (14, 15).

8. Siège pour passager d'avion (1) selon l'une quelconque des revendications précédentes, **caractérisé en ce qu'**au moins une piste de guidage (14) sur le rail (6, 7) est concave.

9. Siège pour passager d'avion (1) selon l'une quelconque des revendications précédentes, **caractérisé en ce que** des roulettes (16-20) d'un chariot à roulettes (12, 13), qui est agencé de manière à pouvoir être coulissé conjointement avec le fond du siège (4) sur l'au moins un rail (6, 7), sont précontraintes sur le rail (6, 7) .

10. Siège pour passager d'avion (1) selon l'une quelconque des revendications précédentes, **caractérisé en ce que** des roulettes (16-20) d'un chariot à roulettes (12, 13), qui est agencé de manière à pouvoir être coulissé conjointement avec le fond du siège (4) sur l'au moins un rail (6, 7), sont montées sur des roulements à billes et/ou des paliers à roulement.

11. Siège pour passager d'avion (1) selon l'une quelconque des revendications précédentes, **caractérisé en ce que** l'au moins un rail (6, 7) présente une piste de guidage incurvée (14, 15) de telle sorte que le fond de siège (4) peut être déplacé vers l'avant et vers le haut.

12. Siège pour passager d'avion (1) selon l'une quelconque des revendications précédentes, **caractérisé en ce que** l'au moins un rail (6, 7) est monté sur deux tubes de support (8, 9) espacés du cadre (2).
